# EUROPEAN PATENT APPLICATION

(11) **EP 2 645 527 A1**
(43) Date of publication of application: **02.10.2013**
(21) Application number: 13153760.7
(22) Date of filing: 01.02.2013
(51) Int. Cl.: H02J 7/04, H02J 7/02, H02J 7/00, B60L 11/18, B60L 3/00, B60L 3/04

(54) **Battery pack**

(30) Priority: 26.03.2012 US 201261615647 P
(71) Applicant: Samsung SDI Co., Ltd., Yongin-si, Gyeonggi-do (KR)
(72) Inventor: Ju, Ri-A, Gyeonggi-do (KR); Kim, Hyun, Gyeonggi-do (KR); Kim, Suk-Kyum, Gyeonggi-do (KR); Woo, Seok-Gyun, Gyeonggi-do (KR)
(74) Representative: Walaski, Jan Filip

(57) **Abstract**

A battery pack comprises a battery module and a battery management system for controlling charging and discharging of the battery module via an external terminal, wherein the battery management system is arranged to limit a state of charge of the battery module to be within a charging and discharging range between a charging limit and a discharging limit, the battery pack further comprising a sensor unit for detecting swelling in the battery module, wherein the battery management system is arranged to limit the state of charge of the battery module in response to the detection of swelling in the battery module.

## Description

The present invention relates to a battery pack.

In general, unlike primary batteries, which are not rechargeable, secondary batteries are rechargeable. According to the types of external devices to which the secondary batteries are applied, the secondary batteries are used as a single battery or in the form of a battery module in which a plurality of batteries are connected as a unit.

According to the conventional art, as a power supply unit for starting up an engine, a lead storage battery is used. Recently, to improve fuel efficiency, an Idle Stop & Go (ISG) system has been applied, and the use of the ISG system is gradually increasing. A power supply unit that supports an ISG system, which is an idling limiting device, has to maintain strong charging or discharging characteristics despite high output characteristics for engine start up and frequent start ups, and has a long life span.

However, charging or discharging characteristics of lead storage batteries according to the conventional art deteriorate due to repeated engine stops or restart-ups under the ISG system, and cannot be used for a long time.

According to the invention, there is provided a battery pack comprising a battery module and a battery management system for controlling charging and discharging of the battery module via an external terminal, wherein the battery management system is arranged to limit a state of charge of the battery module to be within a charging and discharging range between a charging limit and a discharging limit, the battery pack further comprising a sensor unit for detecting swelling in the battery module, wherein the battery management system is arranged to limit the state of charge of the battery module in response to the detection of swelling in the battery module.

The battery management system may include a swelling sensing unit for receiving a battery swelling measurement value from the sensor unit that indicates a degree of swelling and for determining whether the degree of swelling is equal to or greater than a predetermined reference value.

The battery management system may be arranged to reduce the speed of swelling or to correct the swelling in response to a determination that the degree of swelling is equal to or greater than the predetermined reference value.

The battery management system may be arranged to determine whether the state of charge of the battery is at or approaching the charging limit or the discharging limit.

The battery pack may further comprise a selection unit for selectively connecting the battery module to and disconnecting the battery module from the external terminal in response to a determination that the state of charge of the battery is at or approaching the charging limit or the discharging limit.

The battery pack may further comprise an auxiliary battery, wherein in response to a determination that the state of charge of the battery is at or approaching a charging limit or a discharging limit, the selection unit is arranged to switch to the auxiliary battery, or wherein the selection unit may be arranged to disconnect the external terminal from both the battery module and the auxiliary battery in response to a determination that the state of charge of the battery is at or approaching a charging limit or a discharging limit.

The battery pack may further comprise an auxiliary battery and a control module for controlling the charging and discharging range, wherein the control module comprises a common terminal connectable to the external terminal, the battery module being connected to the common terminal via a first variable resistor and the auxiliary battery being connected to the common terminal via a second variable resistor, wherein the battery management system is arranged to control the resistance of the variable resistors in response to a determination that the state of charge of the battery is at or approaching the charging limit or the discharging limit.

The control module may further comprise means for switching between the common terminal and a dummy terminal for disconnecting the battery module and the auxiliary battery from the external terminal.

The battery module may be arranged to be discharged as soon as the charging limit is reached and arranged to be charged as soon as the discharging limit is reached.

The battery module may comprise a lithium ion battery and the auxiliary battery may comprise a lead-acid battery.

An idle stop and go system for a vehicle may comprise a battery pack as disclosed above, a power generating module for charging the battery module, a starter motor arranged to be powered by the discharge of the battery module and an electrical load.

The battery management system may be arranged to control the power generating module to supply power to the battery module when the discharging limit is reached and to control the electrical load to discharge the battery when the charging limit is reached.

The battery management system may be arranged to transmit a signal to the starter motor to start an engine of the vehicle when swelling of the battery is sensed after the engine of the vehicle is stopped.

The battery management system may be arranged to transmit a signal to the electrical load to operate the electrical load when swelling of the battery is sensed after the engine of the vehicle is stopped.

Embodiments of the invention will now be described by way of example with reference to the accompanying drawings, in which:
FIG. 1 illustrates a structure of a vehicle including a battery pack according to an embodiment of the present invention;
FIG. 2 illustrates a structure of a battery pack according to an embodiment of the present invention;
FIG. 3 illustrates an internal structure of a battery management system (BMS) according to an embodiment of the present invention;
FIG. 4 is a schematic view illustrating a selection/control unit according to another embodiment of the present invention;
FIG. 5 is a graph of a state-of-charge (SOC) of a typical battery;
FIG. 6 is a graph illustrating charging or discharging of a battery module by limiting a range of charging or discharging, according to an embodiment of the present invention;
FIG. 7 illustrates an internal structure of a vehicle including a battery pack according to another embodiment of the present invention;
FIG. 8 is a graph illustrating an SOC of a battery when swelling is corrected, according to an embodiment of the present invention;
FIG. 9 is a flowchart illustrating an operation of reducing a proceeding speed of swelling by limiting a charging or discharging range of an SOC of a battery; and
FIG. 10 is a flowchart illustrating an operation of correcting swelling by charging or discharging a battery within a charging or discharging range.

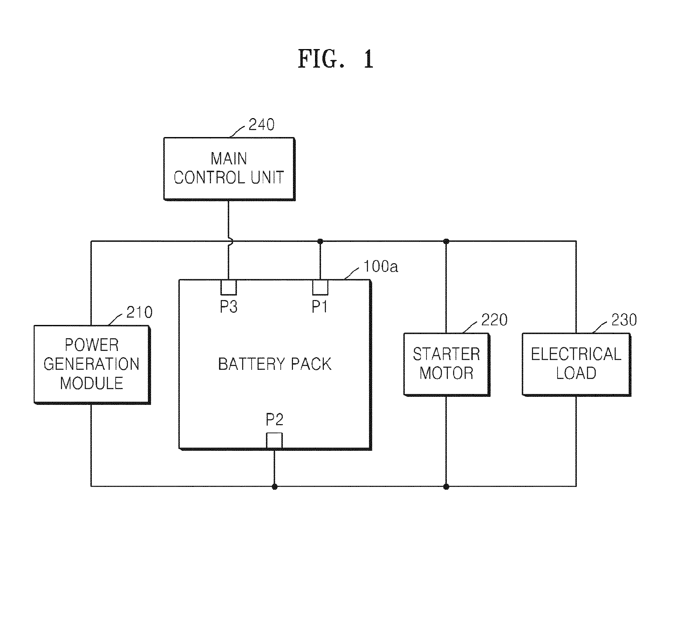

FIG. 1 is a schematic view illustrating a structure of a vehicle including a battery pack 100a according to an embodiment of the present invention.

The battery pack 100a may be electrically connected in parallel to a power generation module 210 and a starter motor 220 via first and second terminals P1 and P2. Hereinafter, the first terminal P1 may be referred to as an external device connection terminal.

In detail, the battery pack 100a may store charging power generated from the power generation module 210 and supply discharging power to the starter motor 220. For example, the power generation module 210 may be connected to an engine (not shown) to provide power thereto, and may be connected to a driving axis of the engine to convert rotational motive power into an electrical output. Here, charging power generated by the power generation module 210 may be stored in a battery module 110, as described below, via the first and second terminals P1 and P2 of the battery pack 100. For example, the power generation module 210 may include a direct current (DC) generator (not shown) or an alternating current (AC) generator (not shown) and a rectifying unit (not shown), and may supply a voltage of about 15 V DC, specifically, voltage of about 14.6 V to 14.8 V DC.

For example, the battery pack 100a may be used as a power unit for starting up an engine of an Idle Stop & Go (ISG) system, in which an ISG function is implemented to improve fuel efficiency. In the ISG system, as the engine is repeatedly and frequently stopped and restarted, charging and discharging of the battery pack 100a are repeated. A lead storage battery applied to conventional ISG systems has problems such as a decrease in durability and life span and a decrease in charging and discharging characteristics due to frequent repetition of charging and discharging operations, and for example, a charging capacity is decreased due to repeated charging or discharging, and thus, starting up ability of an engine is degraded, and an exchange cycle of the lead storage battery is shortened.

For example, compared to the lead storage battery, the battery module 110 according to the current embodiment of the present invention includes a lithium ion battery which maintains relatively uniform charging or discharging characteristics and thus has little deterioration and may be suitable for an ISG system where stopping and re-startup of an engine is repeated. Also, compared to a lead storage battery of the same charging capacity, the battery module 110 according to the current embodiment of the present invention obtains the same charging capacity with less volume than the lead storage battery, and thus, a mounting space may be reduced. However, not only a lithium ion battery but also a nickel metal hydride (NiMH) battery may be used as the battery module 110 according to the current embodiment of the present invention.

According to an embodiment of the present invention, when swelling of a battery is sensed, the battery pack 100a may limit a state-of-charge (SOC) to be within a predetermined charging or discharging range to reduce a swelling proceeding speed or may conduct charging or discharging repeatedly within the charging or discharging range, thereby correcting the swelling. An internal structure and operation of the battery pack 100a will be described in detail below.

Also, a main control unit 240 is a control unit controlling the overall operation of the vehicle in which the battery pack 100a is mounted. The main control unit 240 is connected to the battery pack 100a via a third terminal P3 to exchange a control signal with the battery pack 100a, monitor a state of the battery pack 100a, and control an operation of the battery pack 100a.

Next, the power generation module 210 may refer to a concept including an alternator of a vehicle. An alternator not only supplies charging power to the battery pack 100a but also power to an electrical load 230 while an engine is driven.

Next, the starter motor 220 is driven when an engine of a vehicle is started up, and may provide an initial rotational motive power that rotates a driving axis of the engine. For example, the starter motor 220 may receive stored power via the first and second terminals P1 and P2 of the battery pack 100a and rotate a driving axis of the engine when the engine is started up or when the engine is restarted after an idle stop, thereby re-driving the engine. Furthermore, in the present invention, starter motor 220 may be driven by a driving signal from BMS 120, as described below.

Together with the power generation module 210 and the starter motor 220, the electrical load 230 may be connected to the battery pack 100. The electrical load 230 consumes power stored in the battery pack 100, may receive stored discharging power via the first and second terminals P1 and P2, and may include various components for electrical devices.

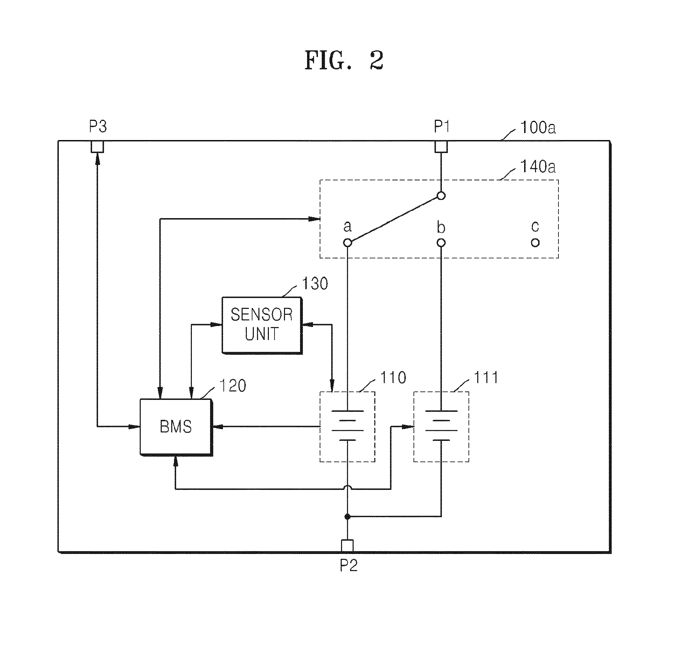

FIG. 2 illustrates a structure of a battery pack 100a according to an embodiment of the present invention.

Referring to FIG. 2, the battery pack 100a may include the battery module 110, an auxiliary battery 111, a battery management system (BMS) 120, a sensor unit 130, and a selection unit 140a.

The battery module 110 and the auxiliary battery 111 may each include a plurality of battery cells (not shown) that are connected serially or parallel. The battery module 110 according to the current embodiment of the present invention is connected between the first and second terminals P1 and P2, and receives charging power and outputs discharging power.

The battery module 110 is a general name of a structure including a plurality of battery sub-units. For example, when the battery pack 100a is a battery rack including a plurality of battery trays, the battery rack may be regarded as the battery module 110. Also, when a battery tray includes a plurality of battery cells, the battery tray may be regarded as the battery module 110.

As described above, the battery module 110 may be formed of a lithium ion battery, a nickel-hydrogen battery, etc. However, the auxiliary battery 111 may be formed of a conventional lead storage battery in order to complement characteristics of the battery module 110.

As the battery module 110 repeats charging and discharging, when the battery module 110 is overcharged or subjected to a high temperature, battery swelling, which refers to expansion of battery cells in the battery module 110 due to an increase in an internal pressure, may be generated. In particular, when the battery module 110 includes a lithium ion battery, battery swelling deforms an external appearance of a case of the battery pack 100a, and stability of the battery pack 100a may be problematic due to this deformation.

The speed of battery swelling may increase when overcharging or overdischarging of the battery is repeated. According to an embodiment of the present invention, an SOC of a battery is limited within a predetermined charging and discharging range to thereby reduce the speed at which swelling of the battery module 110 proceeds. Also, according to another embodiment of the present invention, in order to actively correct the swelling, charging and discharging of the battery module 110 may be repeatedly conducted within a charging or discharging range.

To reduce the battery swelling proceeding speed or to correct the swelling, the BMS 120 controls a charging and discharging process of the battery module 110.

In addition, the BMS 120 is connected to the battery module 110, and controls charging and discharging operations of the battery module 110. In addition, the BMS 120 may perform functions such as overcharge protection function, over-discharging protection function, over-current protection function, over-voltage protection function, overheating protection function, and cell balancing. To this end, the BMS 120 may include a measuring unit that measures a voltage, a current, a temperature, a remaining amount of power, a lifespan, an SOC, or the like from the battery module 110, and may generate a control signal based on a measurement result to control external devices such as the starter motor 220 and the power generation module 210 of the current embodiment of the present invention.

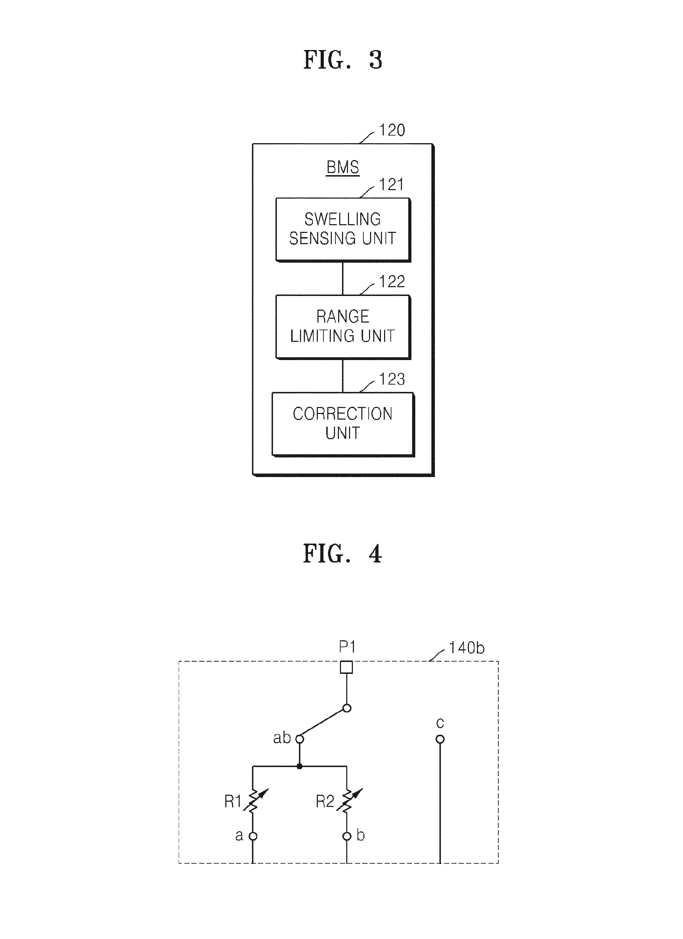

The internal structure and functions of elements of the BMS 120 will be described with reference to FIG. 3 below with other elements of the battery pack 100a.

Next, the sensor unit 130 measures a degree of swelling of the battery module 110. According to an embodiment of the present invention, the sensor unit 130 may measure a degree of swelling of the battery module 110 by using a piezoelectric element. When using a piezoelectric element, a minute change in the battery module 110 may be precisely measured. The sensor unit 130 transmits a measurement result to the BMS 120.

Next, the selection unit 140a selectively connects a circuit between P1 and (a), (b) or (c) according to a control signal of the BMS 120. The selection unit 140a may include a switching device. The selection unit 140a may locate the switching device at (a) to connect a first terminal P1, which is a connection terminal to an external device, to the battery module 110, or locate the switching device at (b) to connect the same to the auxiliary battery 111, or may locate the switching device at (c) so that the switching device is not connected to any of devices in the battery pack 100a.

Hereinafter, an internal structure of the BMS 120 and a method in which the BMS 120 reduces a proceeding speed of swelling of the battery module 110 and corrects the swelling will be described.

FIG. 3 illustrates an internal structure of the BMS 120 according to an embodiment of the present invention.

Referring to FIG. 3, the BMS 120 includes a swelling sensing unit 121, a range limiting unit 122 and a correcting unit 123. First, the swelling sensing unit 121 receives a battery swelling measurement value from the sensor unit 130 to determine whether the degree of swelling exceeds a reference value. For example, if a degree of swelling of the battery module 110 measured by using a piezoelectric element of the sensor unit 130 is equal to or greater than a predetermined reference value, the swelling sensing unit 121 determines that the battery module 110 is swollen and a decrease in the swelling speed or correction of the swelling is required.

Next, the range limiting unit 122 limits an SOC of the battery module 110 to be within a charging and discharging range between a charging limit and a discharging limit according to an embodiment of the present invention to thereby reduce a proceeding speed of swelling.

Referring to FIG. 2 again, when performing charging and discharging, the range limiting unit 122 examines whether an SOC of the battery module 110 is a discharging limit or a charging limit, and if the SOC of the battery module 110 is a discharging limit, the switching device is located at (b) so that an external device may receive power from the auxiliary battery 111 or supply power to the auxiliary battery 111.

Alternatively, if the SOC of battery module 110 reaches a discharging limit or a charging limit, the range limiting unit 122 locates the switching device at (c) to thus block connection between the external device and the battery pack 100.

FIG. 4 is a schematic view illustrating a selection/control unit 140b according to another embodiment of the present invention.

Referring to FIG. 4, in the selection/control unit 140b, a battery module connection terminal (a) and an auxiliary battery connection terminal (b) are respectively connected to variable resistors R₁ and R₂ so as to be connected to a parallel connection terminal (ab). When the selection/control unit 140b of FIG. 4 is included in the battery pack 100, the range limiting unit 122 adjusts an amount of current flowing into the battery module 110 and the auxiliary battery 111 via the variable resistors R₁ and R₂, thereby controlling a charging and discharging range.

That is, when an SOC of the battery module 110 is close to a charging limit or a discharging limit, the range limiting unit 122 locates a switching device at (ab), and sets a resistance of the variable resistor R₁ to be greater than that of the variable resistor R₂ so that more discharging or charging current flows to the auxiliary battery 111 than to the battery module 110.

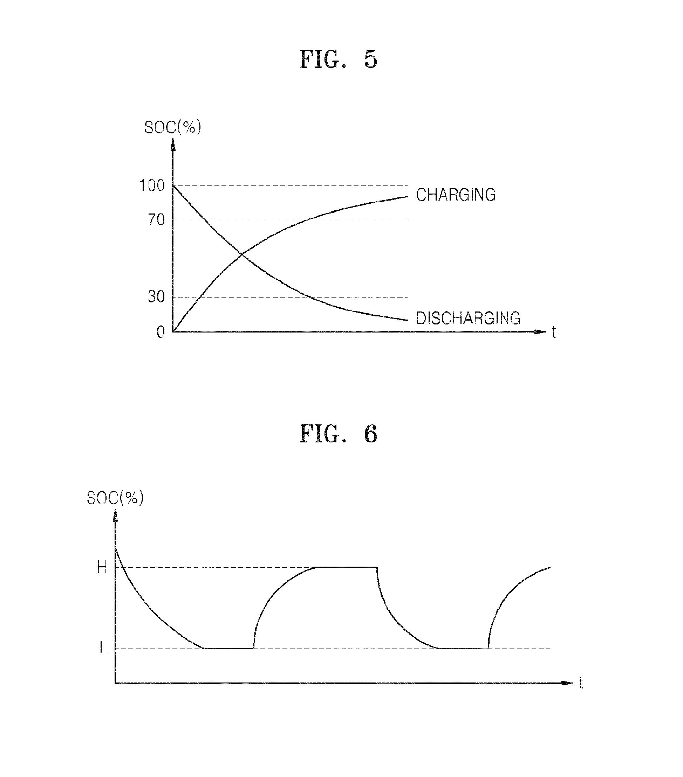

A process of decreasing a swelling proceeding speed of the range limiting unit 122 will be further described with reference to FIGS. 5 and 6 below.

FIG. 5 is a graph of an SOC of a typical battery.

In order to prevent complete charging or complete discharging of a battery where an SOC of the battery is 100% or 0% as shown in FIG. 5, the BMS 120 according to the current embodiment of the present invention may set a charging limit or a discharging limit. For example, the charging limit may be 70% of an SOC maximum, and the discharging limit may be 30% of an SOC maximum.

FIG. 6 is a graph illustrating charging or discharging of a battery module by limiting a range of charging or discharging, according to an embodiment of the present invention. The range limiting unit 122 may control such that when an SOC reaches a discharging limit L while the battery module 110 is being discharged by the electrical load 230 as illustrated in FIG. 6, no more discharging is conducted. Likewise, while charging the battery module 110, when an SOC reaches the charging limit H, no more power may be supplied from the power generation module 210 to the battery module 110.

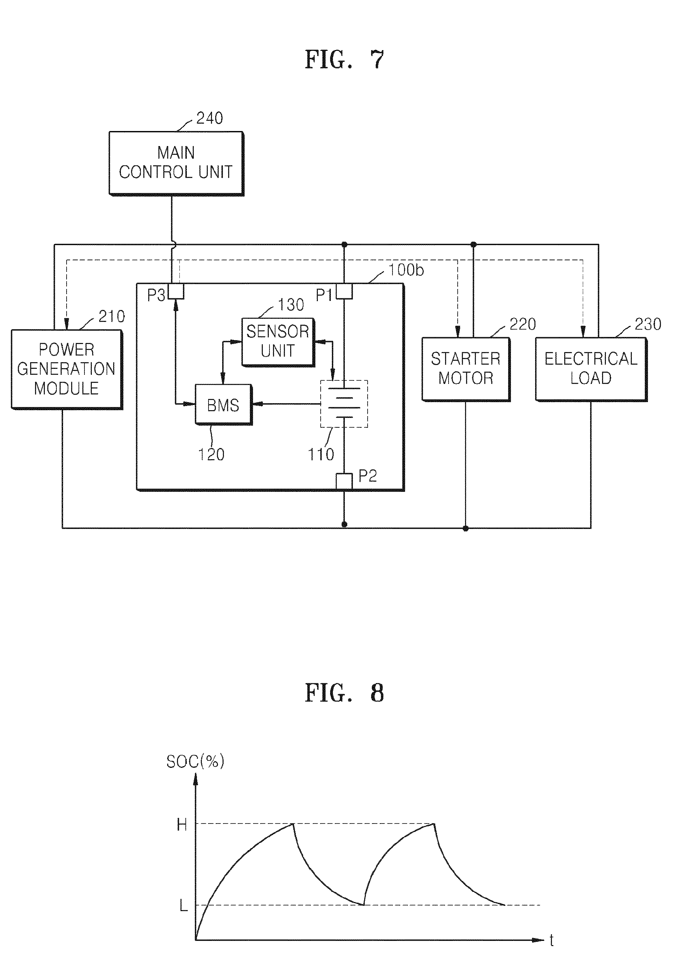

FIG. 7 illustrates an internal structure of a vehicle including a battery pack 100b according to another embodiment of the present invention.

The BMS 120 may not only limit an SOC of a battery to be within a charging or discharging range like in the embodiment of FIG. 2, and according to another embodiment of the present invention, charging or discharging may be actively performed within the charging and discharging range to correct swelling. That is, according to the embodiment of FIG. 2, just the SOC of the battery is limited when charging or discharging a battery via the electrical load 230 or the power generation module 210, but according to the embodiment of FIG. 7, a swollen battery is actively corrected by repeated charging and discharging even when a vehicle is not driven.

Referring to FIG. 7, a path, through which the BMS 120 of the battery pack 100b may transmit a signal to the power generation module 210, the starter motor 220, and the electrical load 230 via a P3 terminal, is added to Figure 1.

First, when swelling of the battery module 110 is sensed after the engine of the vehicle is stopped, the correction unit 123 of the BMS 120 transmits a signal for driving the starter motor 220. That is, even if the user does not start up the engine of the vehicle, the starter motor 220 is driven by a driving signal of the BMS 120, and when the engine is started by the starter motor 220, the power generation module 210 supplies charging power to the battery module 110. That is, charging of the battery module 110 is performed.

When the battery module 110 is charged to reach a charging limit, the correction unit 123 stops operation of the power generation module 210 and drives the electrical load 230 to discharge the battery module 110. That is, even when the engine is stopped, the BMS 120 may forcibly operate the electrical load 230 which may be, for example, a light, a radio, a fan, or an air conditioner, thereby discharging the battery module 110. When the battery module 110 is discharged to reach a discharging limit, the BMS 120 transmits a signal for stopping operation of the electrical load 230 and transmits a signal for driving the starter motor 220 so that the power generation module 210 supplies charging power to the battery module 110.

Charging or discharging of the battery module 110 is repeated within a charging or discharging range in the above-described manner to thereby correct swelling of the battery module 110. If the sensing unit 130 determines that swelling of the battery module 110 is corrected, the BMS 120 stops charging or discharging of the battery module 110.

FIG. 8 is a graph illustrating an SOC of a battery when swelling is corrected, according to an embodiment of the present invention.

As illustrated in FIG. 8, the correction unit 123 may charge the battery module 110 and when an SOC reaches a charging limit H, the battery module 110 is immediately discharged; on the other hand, when an SOC reaches a discharging limit L while discharging the battery module 110, the battery module 110 is immediately charged. According to the above-described method, the correction unit 123 may actively correct swelling of the battery module 110.

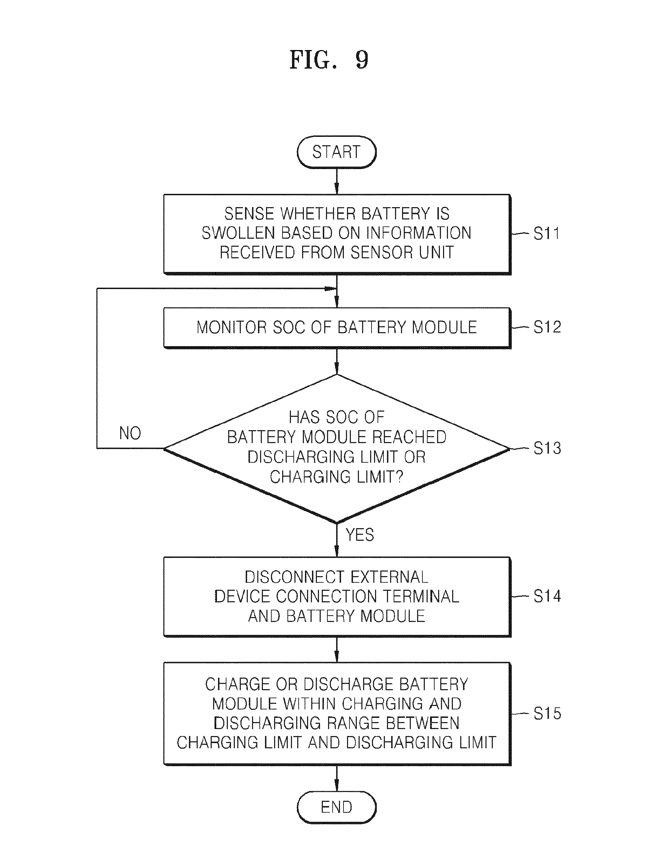

FIG. 9 is a flowchart illustrating an operation of a reducing a proceeding speed of swelling by limiting a charging or discharging range of an SOC of a battery. First, in operation S11, a BMS senses whether a battery is swollen or not by using information received from a sensor unit.

Next, in operation S12, the BMS monitors an SOC of a battery module to sense a moment where an SOC of the battery module reaches a discharging limit or a charging limit.

If the SOC of the battery module has reached a discharging limit or a charging limit (operation S13), the selection unit, or control unit, connects an external device connection terminal, that is, a terminal P1, to the auxiliary battery module 111. Alternatively, the selection unit disconnects the external device connection terminal P1 from the battery module 110, for example by connecting to a dummy terminal c (operation S14).

If the SOC of the battery module has not reached the discharging limit or the charging limit, the SOC of the battery module is further sensed.

Finally, in operation S15, the battery module is charged or discharged within a charging and discharging range between the charging limit and the discharging limit.

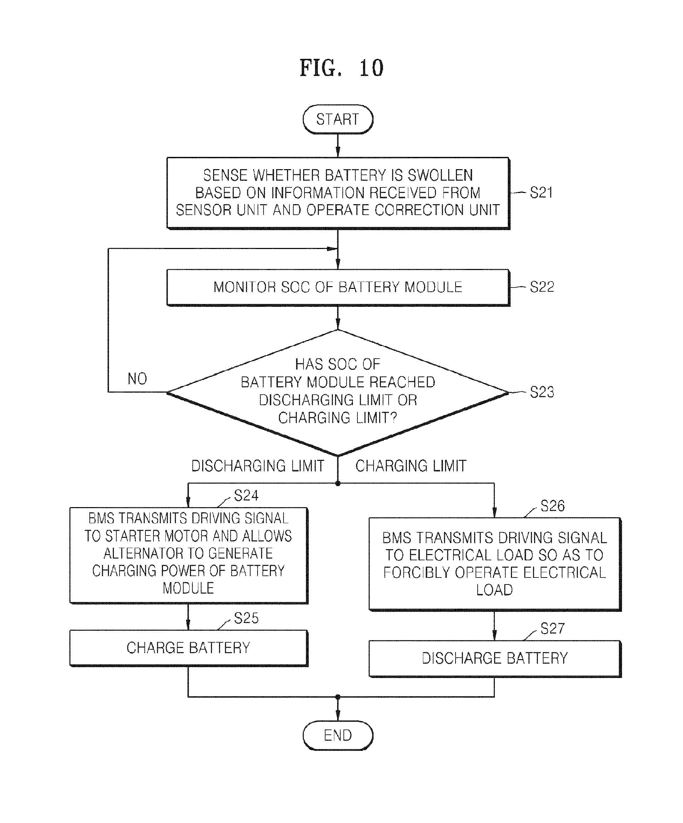

FIG. 10 is a flowchart illustrating an operation of correcting swelling by charging or discharging a battery within a charging or discharging range.

In operation S21, when the engine of a vehicle is stopped, a BMS senses whether a battery is swollen by using information received from a sensor unit, and operates a correction unit.

Next, in operation S22, the BMS monitors an SOC of a battery module to sense a moment when an SOC reaches a discharging limit or a charging limit.

In operation S23, when the SOC of the battery module reaches a discharging limit, the BMS transmits a driving signal to a starter motor and allows an alternator to generate charging power of the battery module in operation S24, and charges the battery in operation S25.

Alternatively, when the SOC of the battery module reaches a charging limit in operation S23, the BMS transmits a driving signal to an electrical load so as to forcibly operate the electrical load in operation S26 to discharge the battery module in operation S27.

While this invention has been particularly shown and described with reference to exemplary embodiments thereof, it will be understood by those of ordinary skill in the art that various changes in form and details may be made therein without departing from the scope of the invention as defined by the appended claims.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A battery pack (100) comprising:
a battery module (110); and
a battery management system (120) for controlling charging and discharging of the battery module (110) via an external terminal (P1);
wherein the battery management system (120) is arranged to limit a state of charge of the battery module (110) to be within a charging and discharging range between a charging limit and a discharging limit, the battery pack further comprising a sensor unit (130) for detecting swelling in the battery module (110), wherein the battery management system (120) is arranged to limit the state of charge of the battery module (110) in response to the detection of swelling in the battery module.

2. A battery pack according to claim 1, wherein the battery management system (120) includes a swelling sensing unit (121) for receiving a battery swelling measurement value from the sensor unit (130) that indicates a degree of swelling and for determining whether the degree of swelling is equal to or greater than a predetermined reference value.

3. A battery pack according to claim 2, wherein the battery management system (120) is arranged to reduce the speed of swelling or to correct the swelling in response to a determination that the degree of swelling is equal to or greater than the predetermined reference value.

4. A battery pack according to any one of the preceding claims, wherein the battery management system (120) is arranged to determine whether the state of charge of the battery is at or approaching the charging limit or the discharging limit.

5. A battery pack according to any one of the preceding claims, further comprising a selection unit (140) for selectively connecting the battery module (110) to and disconnecting the battery module (110) from the external terminal in response to a determination that the state of charge of the battery is at or approaching the charging limit or the discharging limit.

6. A battery pack according to claim 5, further comprising an auxiliary battery (111), wherein in response to a determination that the state of charge of the battery is at or approaching a charging limit or a discharging limit, the selection unit (140) is arranged to switch to the auxiliary battery (111).

7. A battery pack according to claim 5, further comprising an auxiliary battery (111), wherein the selection unit (140) is arranged to disconnect the external terminal from both the battery module (110) and the auxiliary battery (111) in response to a determination that the state of charge of the battery is at or approaching a charging limit or a discharging limit.

8. A battery pack according to any one of claims 1 to 4, further comprising:
an auxiliary battery (111); and
a control module (140) for controlling the charging and discharging range,
wherein the control module comprises a common terminal (ab) connectable to the external terminal (P1), the battery module (110) being connected to the common terminal (ab) via a first variable resistor and the auxiliary battery (111) being connected to the common terminal (ab) via a second variable resistor, wherein the battery management system (120) is arranged to control the resistance of the variable resistors in response to a determination that the state of charge of the battery is at or approaching the charging limit or the discharging limit.

9. A battery pack according to claim 8, wherein the control module further comprises means for switching between the common terminal (ab) and a dummy terminal (c) for disconnecting the battery module (110) and the auxiliary battery (111) from the external terminal.

10. A battery pack according to any one of claims 1 to 5, wherein the battery module (110) is arranged to be discharged as soon as the charging limit is reached and arranged to be charged as soon as the discharging limit is reached.

11. A battery pack according to any one of the preceding claims, when dependent on claim 6, 7 or 8, wherein the battery module (110) comprises a lithium ion battery, and the auxiliary battery (111) comprises a lead-acid battery.

12. An idle stop and go system for a vehicle, comprising:
a battery pack (100) according to any one of the preceding claims;
a power generating module (210) for charging the battery module (110);
a starter motor (220) arranged to be powered by the discharge of the battery module (110); and
an electrical load.

13. An idle stop and go system according to claim 12 when dependent on claim 10, wherein the battery management system is arranged to control the power generating module (210) to supply power to the battery module when the discharging limit is reached and to control the electrical load to discharge the battery when the charging limit is reached.

14. An idle stop and go system according to claim 13, wherein the battery management system is arranged to transmit a signal to the starter motor to start an engine of the vehicle when swelling of the battery is sensed after the engine of the vehicle is stopped.

15. An idle stop and go system according to claim 13 or 14, wherein the battery management system is arranged to transmit a signal to the electrical load to operate the electrical load when swelling of the battery is sensed after the engine of the vehicle is stopped.
